# EUROPÄISCHE PATENTSCHRIFT

(11) **EP 2 457 445 B1**
(45) Veröffentlichungstag und Bekanntmachung des Hinweises auf die Patenterteilung: **18.06.2014**
(21) Anmeldenummer: 11008782.2
(22) Anmeldetag: 04.11.2011
(51) Int. Cl.: A22C 11/10

(54) **Verschliessungsvorrichtung zur Bildung von wurstförmigen Verpackungen**
Closing device for forming sausage-shaped packages
Dispositif de fermeture pour la formation d'emballages en forme de saucisses

(30) Priorität: 25.11.2010 CH 19762010
(43) Veröffentlichungstag der Anmeldung: 30.05.2012
(73) Patentinhaber: Tipper Tie Alpina GmbH, 9230 Flawil (CH)
(72) Erfinder: Pargätzi, Max, 9200 Gossau (CH); Sbalzarini, Lino, 9204 Andwill (CH)
(74) Vertreter: Schalch, Rainer

(56) Entgegenhaltungen:
- DE-A1- 3 840 522
- US-A- 4 100 716
- US-A1- 2007 012 813
- US-A1- 2008 220 704

## Beschreibung

### Technisches Gebiet

Die Erfindung betrifft eine Verschliessvorrichtung zur Bildung wurstförmiger, gefüllter Verpackungen aus einer mit einem Produkt gefüllten, schlauchförmigen Verpackungshülle, die in einer Durchlaufrichtung durch die Verschliessvorrichtung hindurch läuft, umfassend eine Verdrängungseinrichtung sowie eine Clipsetzeinrichtung, wobei die Verdrängungseinrichtung zwei in Durchlaufrichtung nacheinander folgende Verdrängerwerkzeuge aufweist, welche durch einen Antrieb der Verschliessvorrichtung zum Raffen der Verpackungshülle und zum Verdrängen des Füllgutes im Clipsetzbereich ausgestaltet sind, indem das in Durchlaufrichtung zweite Werkzeug gegenüber dem in Durchlaufrichtung ersten, stationären Werkzeug durch den Antrieb in Durchlaufrichtung verschiebbar und nach dem Setzen der Verschlussclips zurück verschiebbar ist.

### Stand der Technik

Derartige Verschliessvorrichtungen, sogenannte Clipmaschinen, sind bekannt, z.B. aus DE-A-40 13 033 und werden nachfolgend auch noch an Hand der Figuren 1 bis 3 erläutert. Bekannte Vorrichtungen weisen zwei Raff- und Verdrängerwerkzeuge auf, welche z.B. scherenartig ausgestaltet sind und auch als Scheren bezeichnet werden, obwohl natürlich kein Schneiden der Verpackungshülle, bzw. des Wurstdarms, durch diese Werkzeuge erfolgt, sondern eine Verletzung der Hülle beim Raffen und Verdrängen gerade zu vermeiden ist. Die Scheren schnüren die in offener Scherenposition in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die in Durchlaufrichtung zweite Schere als Verdrängerwerkzeug zur anderen, in Durchlaufrichtung ersten, stationären Schere seitlich in Durchlaufrichtung bzw. in Längsrichtung der Verpackung verschoben, wodurch das in der Verpackung enthaltene Produkt aus dem zwischen den Scheren liegenden Bereich verdrängt wird und somit ein geraffter, produktfreier Bereich (Zopf genannt) zwischen zwei Würsten geschaffen wird, in den nachfolgend durch die Verschliessvorrichtung die Verschlussclips gesetzt werden. Die Verschliessbewegung und die Öffnungsbewegung der Scheren und die Auf- und Zu-Bewegung von Stempel und Matrize zum Verschliessen der Clips können bekannterweise durch Kurvenscheiben mit Nutkurven und durch Hebel bewirkt werden. Der Versatz in Durchlaufrichtung bzw. die Verdrängerbewegung und die Zurückbewegung des zweiten Verdrängerwerkzeugs bzw. der Schere erfolgt ebenfalls über eine Kurvenscheibe und einen in deren Steuerkurve eingreifenden Verdrängerhebel und einen zusätzlichen Umlenkhebel, der Bewegung des Verdrängerhebels in eine Bewegung in Durchlaufrichtung umlenkt. Die Kurven bzw. Kurvenscheiben werden motorisch angetrieben, was die erläuterte Bewegung der Scheren und von Stempel und Matrize ergibt. In der Regel ist die stationäre Schere mit einer beiden Scherenblättern gemeinsamen Führung versehen, so dass diese Scherenblätter auch bei ganz geöffneter Schere über die Führung miteinander verbunden sind. Bei der durch den Antrieb verschiebbaren Schere wird keine solche Führung vorgesehen, wenn an den Verpackungen bzw. Würsten durch Clips Aufhängeschlaufen für eine vorzugsweise automatisierte Aufhängung der Würste befestigt werden, da ansonsten diese Schlaufen das zweite Werkzeug nicht verlassen könnten.

Bei solchen Verschliessvorrichtungen kann es vorkommen, insbesondere bei einem Platzen der Verpackungshülle bzw. des Wurstdarms, dass ein Clip zwischen dem ersten und dem zweiten Werkzeug bzw. zwischen den Scheren zurückbleibt und an einem der Werkzeuge haftet. Dies kann beim Zurückverschieben des angetriebenen zweiten Werkzeug dazu führen, dass ein Werkzeugteil desselben bzw. ein Scherenblatt dieses Werkzeugs verformt bzw. durch den Clip in Durchlaufrichtung gedrückt wird, was beim erneuten Schliessen dieses Werkzeugs bzw. dieser Schere zu einer Kollision der sich schliessenden Werkzeugteile bzw. Scherenblätter führen kann. Diese Gefahr ist besonders gegeben, wenn dieses Werkzeug bzw. diese Schere keine gemeinsame Führung für die Scherenblätter aufweist.

DE3840522 beschreibt eine Verschliessvorrichtung zur Bildung wurstförmiger, gefüllter Verpackungen aus einer mit einem Produkt gefüllten, schlauchförmigen Verpackungshülle, die in einer Durchlaufrichtung durch die Verschliessvorrichtung hindurch läuft, umfassend eine Verdrängungseinrichtung sowie eine Clipsetzeinrichtung zum Setzen von Verschlussclips, wobei die Verdrängungseinrichtung zwei in Durchlaufrichtung nacheinander folgende Verdrängerwerkzeuge) aufweist, welche durch einen Antrieb der Verschliessvorrichtung zum Raffen der Verpackungshülle und zum Verdrängen des Füllgutes im Clipsetzbereich ausgestaltet sind, indem das in Durchlaufrichtung zweite Werkzeug gegenüber dem in Durchlaufrichtung ersten, stationären Werkzeug durch den Antrieb in Durchlaufrichtung verschiebbar und nach dem Setzen der Verschlussclips zurück verschiebbar ist.

### Darstellung der Erfindung

Der Erfindung liegt die Aufgabe zu Grunde, eine verbesserte Verschliessvorrichtung zu schaffen, welche das genannte Problem vermeidet.

Dies wird bei der Verschliessvorrichtung der eingangs genannten Art dadurch erreicht, dass das erste Werkzeug derart angeordnet ist, dass es durch eine entgegen der Durchlaufrichtung gerichtete Kraft verschiebbar ist und dass ein auf dieses Werkzeug wirkendes Federmittel vorgesehen ist, durch welches eine der Verschiebung entgegenwirkende Rückstellkraft erzeugbar ist.

Durch die Verschiebbarkeit des stationären ersten Werkzeugs gegen eine Federkraft kann dieses Werkzeug ausweichen, wenn ein Clip oder ein anderer Gegenstand zwischen den Werkzeugen eingeklemmt wird, wenn das zweite Werkzeug nach der Clipsetzung in die Raffstellung zurückfährt. Damit wird eine zu hohe zwischen den Werkzeugen wirkende Kraft vermieden, die eines der Werkzeuge und inbesondere das zweite Werkzeug verformen könnte.

Bei einer bevorzugten Ausführungsform ist das Federmittel durch mindestens eine Druckfeder gebildet und insbesondere sind mehrere solche Federn vorgesehen. Bei einer bevorzugten Ausführung ist ein Sensor vorgesehen, welcher zur Detektion der passiven Verschiebung des ersten Werkzeugs ausgestaltet ist und ein Detektionssignal erzeugt, welches an die Steuerung der Verschliesseinrichtung abgegeben wird. Damit kann die Steuerung eine entsprechende Anzeige für die Bedienungsperson bewirken und/oder die Verschliessvorrichtung stoppen.

### Kurze Darstellung der Zeichnungen

Im Folgenden werden eine Vorrichtung und das Vorgehen nach Stand der Technik und werden Ausführungsbeispiele der Erfindung anhand der Zeichnungen näher erläutert. Dabei zeigen
Figur 1 bis Figur 3 schematisch Schritte bei der Herstellung der wurstförmigen Verpackungen;
Figur 4 eine Seitenansicht einer Verschliessvorrichtung zur Erläuterung von deren Elementen und deren Antrieb;
Figur 5 einen Teil der Vorrichtung den Werkzeugen bzw. mit einem Scherenpaar gemäss einer Ausführungsform der Erfindung in teilweise geschnittener Darstellung;
Figur 6 eine Frontalansicht auf die stationäre Schere in einer bevorzugten Ausführung; und
Figur 7 eine Frontalansicht auf die angetrieben verschiebbare Schere in einer bevorzugten Ausführung

### Wege zur Ausführung der Erfindung

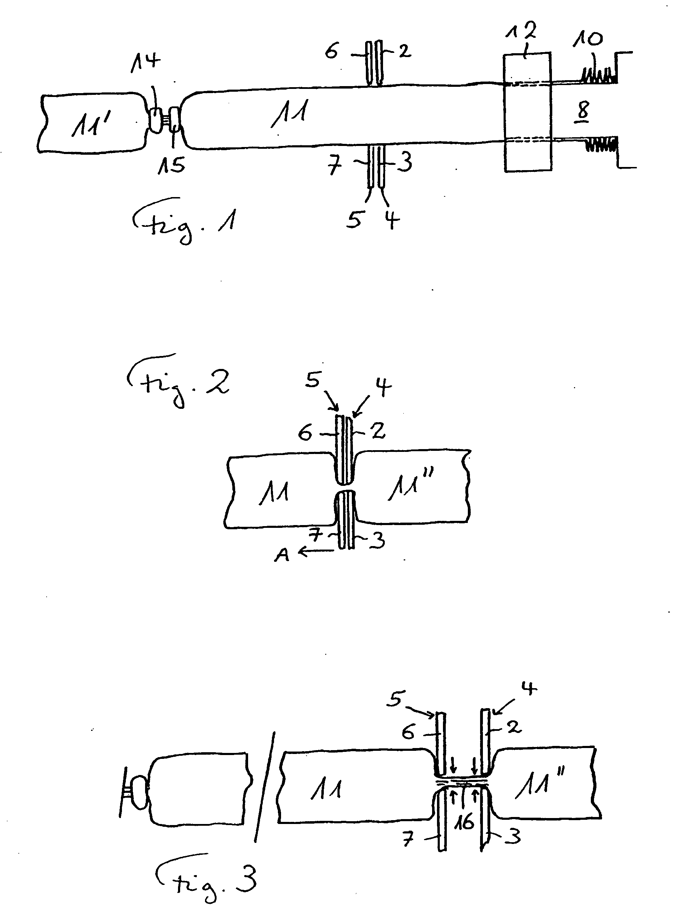

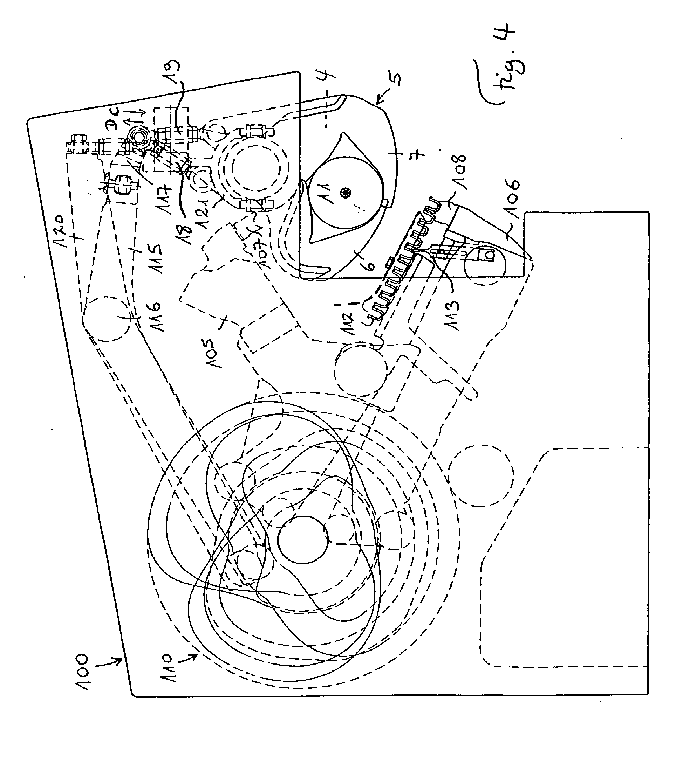

Anhand der Figuren 1 bis 3 wird das Raffen und Verdrängen generell erläutert und die Figuren 4 bis 7 zeigen ein bevorzugtes Ausführungsbeispiel einer Verschliessvorrichtung, welche als erstes und zweites Werkzeug ein Scherenpaar aufweist, wie dies auch in der generellen Erläuterung der Figuren 1 bis 3 der Fall ist.

Figur 1 zeigt in einer stark schematisierten Darstellung eine Verschliessvorrichtung mit deren Verdrängungseinrichtung in einer ersten Stellung mit nahe benachbart nebeneinander liegendem verschiebbaren zweiten Werkzeug 5 und stationärem Werkzeug 4 bzw. nebeneinander liegenden Scheren 5 und 4, welche in Offenstellung die schlauchförmige, gefüllte Verpackungshülle 11 in sich aufnehmen bzw. deren Durchlauf erlauben. Die Figur 1 zeigt dabei auch schematisch, wie die auf dem Füllrohr 8 einer Wurstfüllmaschine aufgezogene leere, gefaltete Verpackungshülle 10 (der Wurstdarm) mit dem Produkt (Wurstbrät) gefüllt wird, wobei der Darm dabei durch eine Darmbremse 12 gebremst wird. Es entsteht die gefüllte schlauchförmige Verpackungshülle 11, die durch die Verschliessvorrichtung hindurch läuft und aus der Portionen bzw. einzelne Würste hergestellt werden müssen.

Figur 1 zeigt auch, wie durch einen vorherigen Raff-, Verdrängungs- und Schliessvorgang, wie er nachfolgend beschrieben wird, bereits die Verschlüsse 14, 15 (Clips) als Endclip der nur teilweise dargestellten vorherigen Wurst 11' und als Anfangsclip der nun in Füllung befindlichen Wurst gesetzt worden sind. Hat die als kontinuierlicher Schlauch aus der Wurstfüllmaschine austretende gefüllte Verpackungshülle eine vorbestimmte Länge bzw. ein vorbestimmtes Gewicht erreicht, so werden die Scheren 4, 5 geschlossen, wodurch sich das Einschnüren der schlauchförmigen Verpackungshülle 11 ergibt, welches als Raffen bezeichnet wird. Die beiden Werkzeuge bzw. Scheren 4, 5 liegen dabei mit geringem Abstand nebeneinander, wie dies Figur 1 und in Figur 2 dargestellt ist. Es verbleibt nach dem Schliessen der Scheren bei beiden Scheren 4, 5 eine kleine Restöffnung für den zusammengerafften Darm. Danach wird das zweite, angetrieben verschiebbare Werkzeug 5 bzw. die Schere 5 (die weiter vom Füllrohr weg liegende Schere) in Längsrichtung der schlauchförmigen Verpackung bzw. in Durchlassrichtung verschoben, was in Figur 2 mit dem Pfeil A dargestellt ist, wodurch das in der Verpackungshülle enthaltene Produkt verdrängt wird, so dass zwischen den Werkzeugen bzw. Scheren 5, 4 eine produktfreie Zone (der Zopf 16) gebildet wird, wie in Figur 3 gezeigt. Dabei wird durch die Restöffnung des Werkzeugs 4 bzw. der Schere 4, die nicht verschoben wird und somit in Durchlaufrichtung stationär bleibt, Darm von der angefangenen, noch nicht fertig gefüllten Wurst 11" nachgezogen. In dem so gebildeten Zopf 16 werden nun auf bekannte Weise Verschlussclips gesetzt, was in Figur 3 nur durch die auf den Zopf 16 gerichteten Pfeile angedeutet ist.

Figur 4 zeigt ein Beispiel einer Verschliessvorrichtung 100 mit einer Verdrängungseinrichtung mit den Werkzeugen 4 und 5 und einer Clipsetzeinrichtung. Dabei ist in dieser Ansicht einer der beiden Clipdrähte ersichtlich, der mit 112 bezeichnet ist und der durch einen Vorschubhebel 113 in eine Matrize 108 gefördert wird. Die am Unterarm 106 der Verschliessvorrichtung 100 angeordnete Matrize und der am Oberarm 105 angeordnete Stempel 107 schneiden bei der Verschliessbewegung jeweils einen Clip vom Clipdraht 112 ab und verschliessen diesen Clip; dies ist bekannt und muss hier nicht weiter erläutert werden. Auf solche Weise werden im produktfreien Bereich bzw. im Zopf in der Regel zwei Clips gesetzt, nämlich der Endclip der einen Wurst und der Anfangsclip für die nachfolgende Wurst. Bekannt ist es, die geschilderten Antriebsbewegungen der Werkzeuge bzw. der Verdrängungseinrichtung und von Unterarm und Oberarm bzw. der Clipsetzeinrichtung der Vorrichtung mittels Kurvenscheiben zu bewirken, die in der Figur 1 lediglich generell mit 110 angedeutet sind. Diese Kurvenscheiben werden z.B. von einem Elektromotor angetrieben. Die Kurvenscheiben für Ober- und Unterarm weisen in ihren Flanken Nuten auf, deren Seitenwandflächen die Steuerkurven für entsprechende Kurvenhebel bilden, die in die Nuten eingreifen. Dies wird hier nicht weiter erläutert, da dies dem Fachmann bekannt ist. Auch die Raffbewegung der Scheren wird durch eine entsprechende Nutkurve in der Flanke einer Kurvenscheibe gesteuert, was in der Figur dadurch angedeutet ist, dass der Kurvenhebel 115, welcher um die Schwenkachse 116 schwenkbar ist z.B. mit einer Rolle in eine Nutkurve der zugehörigen Kurvenscheibe eingreift. Dies bewirkt über den Hebel 115 und den daran anschliessenden Hebel 117 ein Schliessen bzw. Öffnen der Scheren 4 und 5 bzw. den Raffvorgang und das Öffnen nach der Verdrängung. Die Scheren sind Gelenkscheren, deren Scherenblätter auf einer gemeinsamen Achse gelagert sind. Die betätigungsseitigen bzw. zu den Hebeln 115, 117 weisenden Scherenarme sind mittels Distanzgliedern 18 und 19 mit dem freien Ende des Hebels 115 verbunden. Die Restöffnungen der beiden Scheren 4 und 5 können gemeinsam mit einer Stellschraube 119 im Verbindungsglied der beiden Hebel 115 und 117 eingestellt werden.

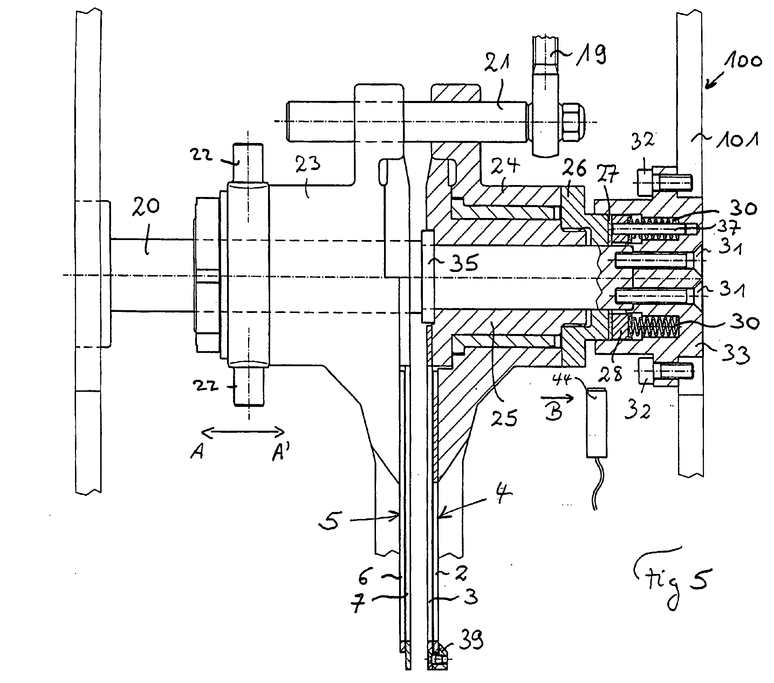

Die Figuren 5 bis 7 zeigen die Verdrängereinrichtung mit den Werkzeugen bzw. Scheren genauer. Als Werkzeuge sind die Schere 4 (stationäre, füllrohrseitige Schere) mit den Scherenblättern 2 und 3 und die Schere 5 (entlang der Achse 20 hin- und her verschiebbare Schere) mit den Scherenblättern 6 und 7 gezeigt. Die Achse 20 bildet die Drehachse für die Raffbewegung der Werkzeuge 4 und 5 bzw. die Gelenkachse für die beiden Gelenkscheren 4 und 5. Für die Raffbewegung bzw. die Schliessbewegung und die Öffnungsbewegung ist in der Figur 5 nur das eine Distanzglied von Figur 4 für die Bewegung der Scherenblätter 6 und 2 ersichtlich, das über den Bolzen 21 auf die (aussen liegenden) Scherenblatthalter 23 und 24 wirkt. Der Antrieb für die innen direkt auf der Achse 20 liegenden Scherenblatthalter (nur der Halter 25 des stationären Werkzeugs bzw. der stationären Schere 4 ist in der Schnittansicht rechts in der Figur ersichtlich) für die Scherenblätter 7 und 3 ist nicht ersichtlich. Die Verdrängerbewegung bzw. die Hin- und Herbewegung des angetrieben verschiebbaren Werkzeugs 5 bzw. der Schere 5 auf der Achse 20 erfolgt über die Zapfen 22, an denen der zuvor erläuterte Antrieb für die Verschiebung in Durchlaufrichtung A bzw. zurück in Gegenrichtung A' angreift. Dies wird hier nicht weiter erläutert, da dies dem Fachmann bekannt ist.

Gemäss der vorliegenden Erfindung ist das stationäre Werkzeug 4 (stationär bedeutet hier, dass dieses Werkzeug durch den Antrieb der Verschliessvorrichtung nicht entlang der Achse 20 verschoben wird) durch eine Kraft in Richtung B, also entgegen der Durchlaufrichtung des gefüllten Verpackungsschlauchs verschiebbar, wobei dies gegen die Kraft eines Federmittels erfolgt. Das Federmittel hält auch das Werkzeug stationär solange die Kraft in Richtung B nicht auftritt, was beim Normalbetrieb der Verschliessvorrichtung der Fall ist. Als Federmittel sind in diesem Ausführungsbeispiel eine Mehrzahl von Druckfedern 30 gezeigt, welche das Werkzeug 4 bzw. die Schere 4 gegen einen Anschlag 35 pressen, der fest auf der Achse 20 sitzt. So können z.B. sechs Druckfedern 30 vorgesehen sein, welche gleichmässig radial um die Achse 20 angeordnet sind. Anstelle von mehreren Druckfedern könnte auch eine einzige Druckfeder vorgesehen sein, die zentrisch um die Achse liegt und die die Achse in sich aufnimmt. Anstelle der Verwendung von Druckfedern als Federmittel können auch andere dem Fachmann bekannte Federmittel verwendet werden.

In dem gezeigten Beispiel ist die Achse 20 in einem Flansch 35 mittels Schrauben 31 befestigt und der Flansch 35 ist am Gehäuse 101 der Verschliessvorrichtung 100 mittels der Schrauben 32 befestigt. Eine Büchse 26 nimmt die beiden Scherenblatthalter 24 und 25 der Schere 4 auf und bildet deren Abstützung auf den Federmitteln 30 über eine Anlaufscheibe 27 und eine Gleitscheibe. Diese Ausführung ist als bevorzugtes Beispiel zu verstehen, es ist für den Fachmann aber ersichtlich, dass er die passive (nicht durch den Antrieb der Verschliessvorrichtung bewirkte) Verschiebbarkeit des Werkzeugs 4 bzw. der Schere 4 in Richtung B auf konstruktiv verschiedene Weise lösen kann.

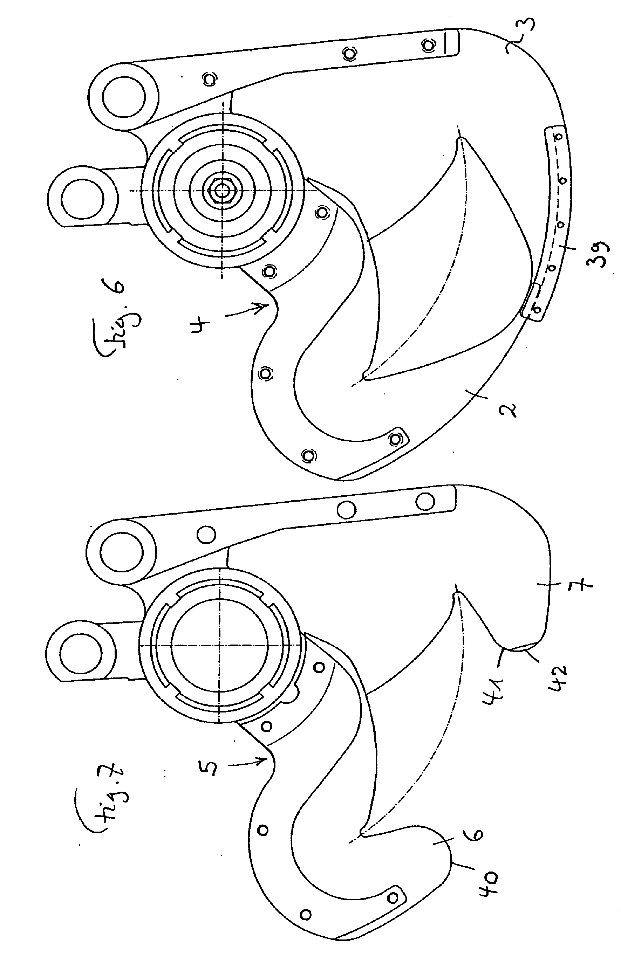

Bevorzugt erzeugt das Federmittel im stationären Zustand des Werkzeugs 4 eine Vorspannung auf dieses, so dass es gegen den Anschlag 35 gepresst wird und eine definierte Lage für das Raffen, Verdrängen und Clippen besteht. Diese Vorspannkraft kann z.B. im Bereich von 20N bis 30N betragen. Eine Einstellbarkeit der Vorspannkraft kann vorgesehen sein. Die Verschiebung des im Normalbetrieb stationären Werkzeugs 4 in Richtung B und somit entgegen der Federkraft des Federmittels kann vorkommen, wenn die eingangs genannte Störung auftritt, dass ein Clip, der nicht an der Verpackungshülle sitzt (was durch ein Platzen der Hülle beim Verschliessen hervorgerufen werden kann) an einer der Scheren 4, 5 "klebt" (hervorgerufen z.B. durch ausgetretenes Produkt). In diesem Fall wird der Clip zwischen der stationären Schere 4 und der durch den Antrieb der Verschliessvorrichtung in Richtung auf die Schere 4 zurückbewegte Schere 5 eingeklemmt. Da die Schere 5 ohne Scherenführung ausgeführt sein kann (was anhand der Figuren 6 und 7 noch dargestellt wird), kann sich diese Schere durch das Einklemmen des Clips teilweise verbiegen, was beim Schliessen der Schere für den Raffvorgang zu einer Kollision der beiden Scherenarme 6, 7 führen könnte. Dies wird gemäss der Erfindung vermieden, indem die Schere 4 in einem solchen Störungsfall in Richtung B ausweicht, da dabei die Vorspannungskraft des Federmittels überwunden wird und das Ausweichen der Schere 4 erfolgt. Damit wird eine Verbiegung der Schere 5 vermieden (da die mit dem Federmittel eingestellte Kraft geringer ist als die zur Verbiegung der Schere 5 führende Kraft) und damit die Gefahr der Kollision der Scherenblätter 6 und 7.

Es kann sein, dass sich der eingeklemmte Clip von selber aus der Lage zwischen den Werkzeugen löst. Dies bewirkt eine Rückstellung des Werkzeugs 4 in seine stationäre Lage durch das Federmittel. Der Betrieb der Vorrichtung läuft dann ohne Unterbrechung weiter. Es kann auch ein Sensor vorgesehen sein, der die Verschiebung des Werkzeugs 4 in Richtung B feststellt und ein Sensorsignal an die Steuerung der Verschliessvorrichtung abgibt. Die Steuerung kann damit eine Anzeige, ein Alarmsignal und/oder einen Betriebsunterbruch veranlassen. Der Sensor kann zum Beispiel als kapazitiver oder induktiver Näherungssensor oder als Lichtschranke ausgebildet sein, um die Verschiebung des Werkzeugs in Richtung B zu detektieren. Es kann z.B. durch einen mechanischen Anschlag der Büchse 26 am Flansch 33 oder durch einen Stift 37 bei einer Feder ein maximaler Verschiebeweg von ca. 4mm in Richtung B für das Werkzeug 4 erlaubt werden.

Figur 6 zeigt eine frontale Ansicht auf die stationäre Schere 4 und dient zur Erläuterung der Führung 39, welche die Scherenblätter auch in Offenstellung der Schere miteinander verbindet, so dass sich eine umfangsmässig geschlossene Durchlauföffnung durch das Werkzeug ergibt. Dadurch ergibt sich eine erhöhte Stabilität der Schere. Im Gegensatz dazu zeigt Figur 7 die verschiebbare Schere 5, die keine derartige Führung aufweist, so dass die Scherenblätter bei geöffneter Schere keine Verbindung von deren freien Enden haben, so dass das die Durchlauföffnung des offenen Werkzeugs umfangmässig nicht geschlossen ist. Dies erhöht die Gefahr einer Durchbiegung bzw. Verbiegung eines Scherenblatts auf Grund eines Fremdkörpers bzw. Clips, der wegen einer Störung zwischen den Scheren eingeklemmt wird. Diese Durchbiegung wird indes bei der vorliegenden Erfindung weitgehend vermieden. Als bevorzugte Ausführung ist ferner bei der verschiebbaren Schere mindestens eines der freien Scherenblattenden 40, 41 (hier das Ende 41) mit einer Anschrägung 42 bzw. Fase versehen, was die Gefahr einer Kollision der Scherenblattenden weiter verringert.

## Patentansprüche

1. Verschliessvorrichtung (100) zur Bildung wurstförmiger, gefüllter Verpackungen (11) aus einer mit einem Produkt gefüllten, schlauchförmigen Verpackungshülle, die in einer Durchlaufrichtung durch die Verschliessvorrichtung hindurch läuft, umfassend eine Verdrängungseinrichtung sowie eine Clipsetzeinrichtung zum Setzen von Verschlussclips, wobei die Verdrängungseinrichtung zwei in Durchlaufrichtung nacheinander folgende Verdrängerwerkzeuge (4, 5) aufweist, welche durch einen Antrieb der Verschliessvorrichtung zum Raffen der Verpackungshülle und zum Verdrängen des Füllgutes im Clipsetzbereich ausgestaltet sind, indem das in Durchlaufrichtung zweite Werkzeug (5) gegenüber.dem in Durchlaufrichtung ersten, stationären Werkzeug (4) durch den Antrieb in Durchlaufrichtung verschiebbar und nach dem Setzen der Verschlussclips zurück verschiebbar ist, **dadurch gekennzeichnet, dass** das stationäre erste Werkzeug derart angeordnet ist, dass es durch eine entgegen der Durchlaufrichtung gerichtete Kraft (B) entgegen der Durchlaufrichtung verschiebbar ist und dass ein auf dieses Werkzeug wirkendes Federmittel (30) vorgesehen ist, durch welches eine der Verschiebung entgegenwirkende Kraft erzeugbar ist.

2. Verschliessvorrichtung nach Anspruch 1, **dadurch gekennzeichnet, dass** das erste Werkzeug eine Schere (4) ist, deren Scherenblätter (2, 3) um eine Schwenkachse (20) schwenkbar sind und welche mit einer der Schwenkachse gegenüberliegenden Führung (39) für die Scherenblätter versehen ist, derart, dass die Schere in Offenstellung eine umfangsmässig geschlossene Durchlauföffnung bildet.

3. Verschliessvorrichtung nach Anspruch 1 oder 2, **dadurch gekennzeichnet, dass** das zweite Werkzeug (5) eine Schere ist, deren Scherenblätter (6, 7) um eine Schwenkachse (20) schwenkbar sind und in Offenstellung eine umfangsmässig offene Durchlassöffnung bilden.

4. Verschliessvorrichtung nach Anspruch 3, **dadurch gekennzeichnet, dass** das freie Ende mindestens eines der Scherenblätter mit einer Anschrägung (42) versehen ist.

5. Verschliessvorrichtung nach einem der Ansprüche 1 bis 4, **dadurch gekennzeichnet, dass** das Federmittel von mindestens einer Druckfeder (30) gebildet ist.

6. Verschliessvorrichtung nach einem der Ansprüche 1 bis 5, **dadurch gekennzeichnet, dass** das Federmittel von einer Mehrzahl um die Schwenkachse herum angeordneten Druckfedern (30) gebildet ist.

7. Verschliessvorrichtung nach einem der Ansprüche 1 bis 6, **dadurch gekennzeichnet, dass** das Federmittel eine Vorspannkraft in Durchlaufrichtung auf das stationäre Werkzeug (4) ausübt.

8. Verschliessvorrichtung einem der Ansprüche 1 bis 7, **dadurch gekennzeichnet, dass** ein Sensor (44) vorgesehen ist, durch welchen eine Verschiebung des stationären Werkzeugs (4) entgegen der Durchlaufrichtung detektierbar ist und dass die Verschliessvorrichtung eine Steuereinrichtung aufweist, durch welche das Sensorsignal auswertbar und beim Vorliegen einer Verschiebung eine Anzeige für die Bedienungsperson aktivierbar ist und/oder auf den Antrieb einwirkbar ist.

## Claims

1. Closing device (100) for forming sausage-type, filled packages (11) from a tubular package shell filled with a product and travelling through the closing device in a throughput direction, comprising a displacement device as well as a clip applying device for applying closing clips, wherein the displacement device has two consecutive displacement tools (4, 5) in throughput direction, being adapted to compact the package shell and to displace the contents from the clip application area by means of a drive, in such a way that the second tool (5) in throughput direction is shiftable in throughput direction with respect to the first, stationary tool (4) in throughput direction and is shiftable back after having applied the clip, by means of the drive, **characterized in that** the stationary first tool is arranged in such a way that it is shiftable in the opposite throughput direction by means of a force (B) pointing in the opposite throughput direction and **in that** a spring means (30) is provided, which acts upon this tool, and by means of which a force acting against the shifting direction is generated.

2. Closing device according to claim 1, **characterized in that** the first tool is a scissor (4), the scissor blades of which (2, 3) are pivotable about a pivot axis (20) and which has a guiding (39) for the scissor blades, arranged in front of the pivot axis, in such a way that the scissor forms a throughput opening which is closed with respect to its circumference in an opened position.

3. Closing device according to claim 1 or 2, **characterized in that** the second tool (5) is a scissor, the scissor blades of which (6, 7) are pivotable about a pivot axis (20) and form a throughput opening which is opened with respect to its circumference in an opened position.

4. Closing device according to claim 3, **characterized in that** the free end of at least one of the scissor blades is provided with an inclined section (42).

5. Closing device according to one of the claims 1 to 4, **characterized in that** the spring means is formed by at least a pressure spring (30).

6. Closing device according to one of the claims 1 to 5, **characterized in that** the spring means is formed by a plurality of pressure springs (30) arranged around the pivot axis.

7. Closing device according to one of the claims 1 to 6, **characterized in that** the spring means exerts a pretensioning force in throughput direction onto the stationary tool.

8. Closing device according to one of the claims 1 to 7, **characterized in that** a sensor (44) is provided, by means of which a shift of the stationary tool (4) in the opposite throughput direction is detectable and **in that** the closing device has a controlling device by means of which the sensor signal is evaluated and a display for an operator is activated and/or it is acted on the driver in case of a shift.

## Revendications

1. Dispositif de fermeture (100) pour former des emballages (11) remplies et en forme de saucisson à partir d'une enveloppe tubulaire d'emballage remplie avec un produit et transportée à travers le dispositif de fermeture dans une direction d'avancée, comprenant un dispositif de déplacement et un dispositif d'application de clips pour appliquer des clips de fermeture, le dispositif de déplacement ayant deux outils de déplacement (4, 5) consécutives dans la direction d'avancée et adaptés à comprimer l'enveloppe d'emballage et à déplacer le contenu de la zone d'application du clip à l'aide d'un entraînement, en déplaçant le deuxième outil (5) dans la direction d'avancée en direction d'avancée par rapport au premier outil stationnaire (4) dans la direction d'avancée et le retournant après l'application du clip, à l'aide de l'entraînement, **caractérisé en ce que** le premier outil stationnaire est arrangé de manière à pouvoir être déplacé dans une direction opposée à la direction d'avancée à l'aide d'une force (B) dirigée dans la direction opposée à la direction d'avancée et **en ce qu'**un moyen de ressort (30) est prévu, qui agit sur cet outil, à l'aide duquel une force opposée au déplacement est générée.

2. Dispositif de fermeture selon la revendication 1, **caractérisé en ce que** le premier outil est une cisaille (4), les lames (2, 3) de laquelle sont pivotables, la cisaille ayant un guidage (39), opposé à un axe de pivotement, pour les lames de cisaille, de sorte que la cisaille forme une ouverture d'avancée, qui estfermée par rapport à sa circonférence dans la position ouverte.

3. Dispositif de fermeture selon la revendication 1 ou 2, **caractérisé en ce que** le deuxième outil (5) est une cisaille, les lames de cisaille (6, 7) de laquelle sont pivotables par rapport à un axe de pivotement (20), formant une ouverture d'avancée qui est ouverte par rapport à sa circonférence dans la position ouverte.

4. Dispositif de fermeture selon la revendication 3, **caractérisé en ce que** la libre extrémité d'au moins une des lames de cisaille a une section inclinée (42).

5. Dispositif de fermeture selon l'une des revendications 1 à 4, **caractérisé en ce que** le moyen de ressort est formé par au moins un ressort à pression (30).

6. Dispositif de fermeture selon l'une des revendications 1 à 5, **caractérisé en ce que** le moyen de ressort est formé par une pluralité de ressorts à pression (30), arrangés autour de l'axe de pivotement.

7. Dispositif de fermeture selon l'une des revendications 1 à 6, **caractérisé en ce que** le moyen de ressort exerce une force de précontrainte en direction d'avancée sur l'outil stationnaire (4).

8. Dispositif de fermeture selon l'une des revendications 1 à 7, **caractérisé en ce qu'**un capteur (44) est prévu, à l'aide duquel un déplacement de l'outil stationnaire (4) contre la direction d'avancée est détectable et **en ce que** le dispositif de fermeture a un dispositif de contrôle, à l'aide duquel le signal du capteur est évalué et, en cas d'un déplacement, un affichage pour un opérateur est activé et/ou il est possible d'actionner sur l'entraînement.
